(19) Europäisches Patentamt

European Patent Office

Office européen des brevets

(11) **EP 1 013 484 B1**

(12) **EUROPEAN PATENT SPECIFICATION**

(45) Date of publication and mention
of the grant of the patent:
**07.12.2005 Bulletin 2005/49**

(51) Int Cl.⁷: **B60C 23/06**

(21) Application number: **99310284.7**

(22) Date of filing: **21.12.1999**

(54) **Method of alarming decrease in tyre air-pressure and apparatus used therefor**

Gerät und Verfahren zum Detektieren eines Druckabfalls im Reifen

Appareil et procédé concernant la détection d'une baisse de pression dans un pneumatique

(84) Designated Contracting States:
**DE FR GB**

(30) Priority: **25.12.1998 JP 36983198**

(43) Date of publication of application:
**28.06.2000 Bulletin 2000/26**

(73) Proprietors:
• **SUMITOMO RUBBER INDUSTRIES LIMITED
Kobe-shi, Hyogo-ken (JP)**
• **Sumitomo Electric Industries, Ltd.
Osaka-shi, Osaka-fu (JP)**

(72) Inventor: **Oshiro, Yuji
Kakogawa-shi, Hyogo-ken (JP)**

(74) Representative:
**Manitz, Finsterwald & Partner GbR
Postfach 31 02 20
80102 München (DE)**

(56) References cited:
**EP-A- 0 657 313        DE-A- 4 331 845**

## Description

The present invention relates to a method for alarming decrease in tyre air-pressure and an apparatus used therefor. More particularly, the present invention relates to a method for alarming decrease in tyre air-pressure and an apparatus used therefor capable of properly judging that decrease in internal pressure has occurred in any of the tyres attached to a vehicle equipped with a limited slip differential device (LSD) and generating an alarm accordingly.

It is conventionally known that the dynamic load radius of a tyre becomes smaller when the air-pressure of the tyre is decreased, and that the rotational velocity or rotational angular velocity becomes faster than that of a tyre having a normal air-pressure. For instance, there is proposed a method for detecting decrease in internal pressure based on such relative differences of rotational angular velocities of tyres (see, for instance, Japanese Unexamined Patent Publication No 305011/1988).

A method for judging alarm in a conventional apparatus for detecting decrease in air-pressure is generally performed through the following steps.

1. A judgement value is calculated at each specified interval (e.g. every second)
2. When a specified number of judgement values have been stored (e.g. five values), an average value of these values is calculated.
3. Once a specified number of average values have been stored (e.g. twelve values), another average value of these values is calculated and decompression is judged on the basis of this average value.

In the above arrangement, each of the values which have been obtained in steps 1) to 3) are stored in RAMs (isokinetic random access memory devices). Judgement values obtained in the decompressed condition, for instance, twelve values remain in some of the RAMs when the process returns from a step of judging decompression of a tyre to a step of judging a normal internal pressure. Therefore, there exists a fear that it might be judged that a judgement value close to a decompressed condition provides a false alarm owing to variations in judgement values for running data obtained after judging that a normal internal pressure has been assumed even though the tyre might be in a normal condition.

Among recent vehicles, there are some which are equipped with a limited slip differential device in the differential of a driving axle to improve running performances at the time of, for instance, cornering. The mechanism of the limited slip differential device is so arranged that the differential effect is restricted until the differential torque exceeds a set value of below that torque the driving wheels are rotated at identical velocities on the right and left sides of the vehicles.

In a vehicle equipped with such a limited slip differential device, judgement of alarm in the above steps 1) to 3) is performed separately for a region in which differential is limited (straight line region) and for a region in which differential is not limited (turning region). Although methods for judging alarm are somewhat different from each other, there also exists a danger that a value is judged to be a false alarm owing to similar reasons as for conventional apparatuses for detecting decrease in air-pressure.

Document DE 43 31 845 A relates to a method of generating a warning signal in case of an undesired pressure drop in a vehicle tyre. Signals of the rotational speed of the wheels are fed to a filter for summing. The prevailing summation value is evaluated in a computing stage. It is ascertained by a fuzzy logic whether changes in the rotational speed signals are due to an acceleration of the vehicle or a tyre defect. In the first case, the signal path to the filter is interrupted. The summation value previously ascertained is not erased, so that a warning signal may be generated rapidly after a travelling state with acceleration has ended.

Document EP-A-0 657 313 discloses a manual reset of memories. Such a clearing of memories is made in case of an initialization step for example to correct variations in tyre diameter.

The present invention has been made in view of these facts, and it is an object of the invention to provide a method for alarming decrease in tyre air-pressure and an apparatus used therefor capable of properly judging decrease in internal pressure of a tyre.

According to one aspect of the present invention, there is provided a method for alarming decrease in tyre air-pressure according to claim 1.

In accordance with another aspect of the present invention, there is provided an apparatus for alarming decrease in tyre air-pressure according to claim 2.

Another aspect provides a method for alarming decrease in tyre air-pressure for detecting decrease in internal pressure of a tyre based on rotational information obtainable from tyres of a four-wheeled vehicle equipped with a limited slip differential device, wherein in case it is judged that a normal internal pressure has been reassumed after a tyre has been judged to be in a decompressed condition when the vehicle is performing running in a substantially straight manner in a region in which driving wheels are rotated at identical velocities, memories of isokinetic random access memory devices corresponding to the straight-ahead running are cleared; and wherein in case it is judged that a normal internal pressure has been reassumed after a tyre has been judged to be in a decompressed condition when the vehicle is performing turning movements in a region in which the driving wheels are not rotating at identical velocities, memories of isokinetic random access memory devices corresponding to the straight-ahead running and the turning movement are cleared.

In yet another aspect an apparatus is provided for alarming decrease in tyre air-pressure for detecting decrease internal pressure of a tyre based on rotational information obtainable from tyres of a four-wheeled vehicle comprised with a limited slip differential device, wherein the apparatus includes a running memory clearing means which clears memories of isokinetic random access memory devices corresponding to only straight-ahead running in case it is judged that a normal internal pressure has been reassumed after a tyre has been judged to be in a decompressed condition when the vehicle is performing running in a substantially straight manner in a region in which driving wheels are rotating at identical velocities, and which clears memories of isokinetic random access memory devices corresponding to straight-ahead running and turning movements in case it is judged that a normal internal pressure has been reassumed after a tyre has been judged to be in a decompressed condition when the vehicle is performing turning movements in a region in which the driving wheels are not rotating at identical velocities.

The method and apparatus for alarming decrease in tyre air-pressure according to the present invention will now be explained by example only based on the accompanying drawings in which:

Figure 1 is a block diagram showing one embodiment of the apparatus for alarming decrease in tyre air-pressure according to the present invention;
Figure 2 is a block diagram showing electric arrangements of the apparatus for alarming decrease in tyre air-pressure of Figure 1; and
Figure 3 is a flow chart.

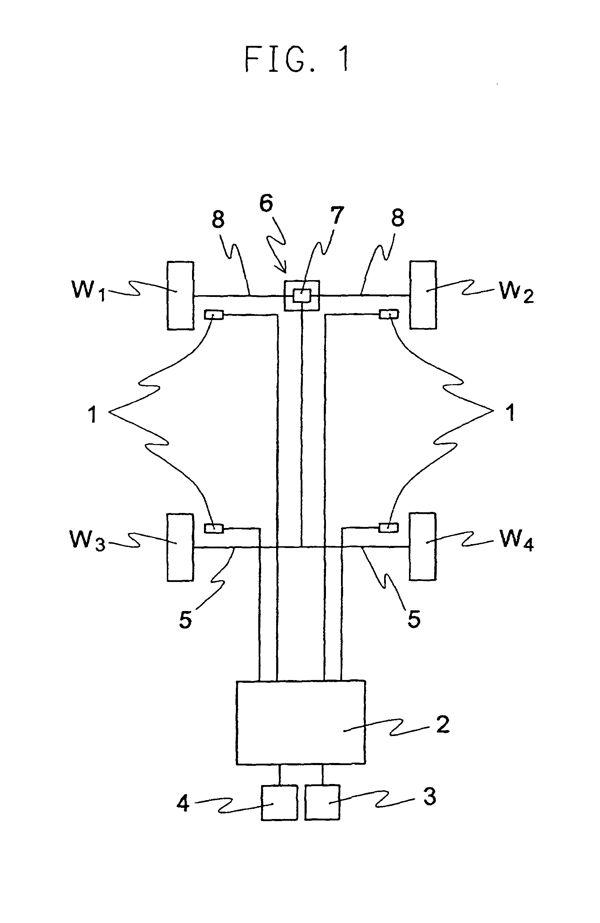

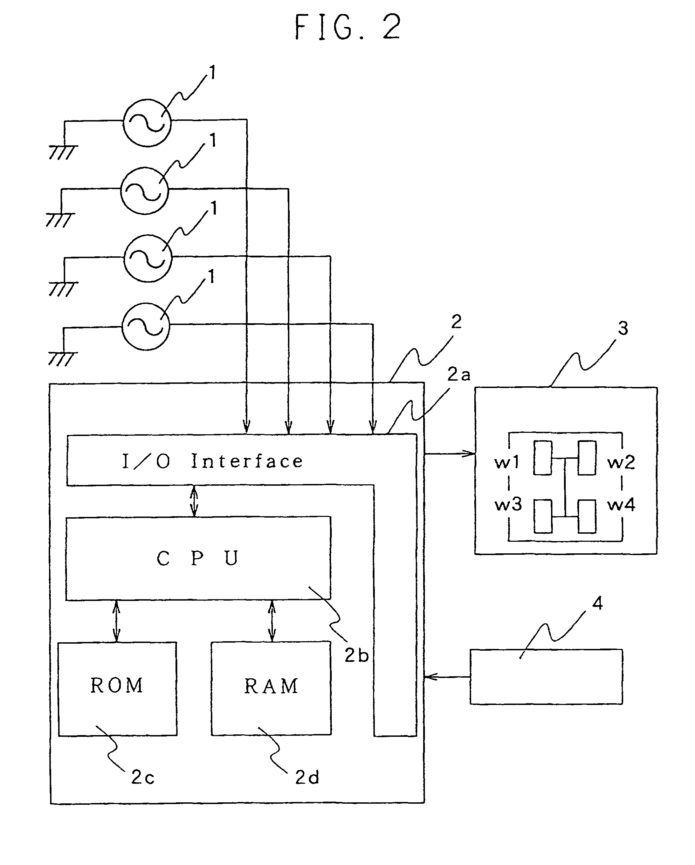

As shown in Figure 1, the apparatus for alarming decrease in air-pressure is designed to judge whether an air-pressure of any of four wheels $W_1$, $W_2$, $W_3$ and $W_4$ which are one pair of driving wheels and one pair of following wheels on a four-wheeled vehicle has decreased or not. It comprises ordinary wheel speed sensors 1 which are respectively provided in connection with each of the tyres $W_1$, $W_2$, $W_3$ and $W_4$ as well as a control unit 2. Each wheel speed sensor 1 detects rotation information for each tyre such as the number of rotations, the rotational velocity and the rotational angular velocity. Outputs of the wheel speed sensors 1 are supplied to the control unit 2. To the control unit 2, there are connected a display 3 comprising a liquid crystal display device, a plasma display device, or CRT for notifying a tyre $W_1$, $W_2$, $W_3$ and $W_4$ of which air-pressure has decreased, and a switch SW4 which can be operated by the driver. As shown in Figures 2, the control unit 2 comprises an I/O interface 2a required for sending/receiving signals to/from an external device, a CPU 2b which functions as a centre of calculation, a ROM (memory device for read out only) 2c which stores a control operation program for the CPU 2b, and a plurality of RAMs (isokinetic random access memory devices) 2d into which data are temporarily written and from which data are read out when the CPU 2b performs control operations.

In this embodiment, each wheel speed sensor 1 serves as a rotational information detecting means, and the control unit 2 includes a velocity calculating means, turning radius calculating means, calculating means for acceleration in the lateral direction (hereinafter called "lateral G"), judging means as well as running memory clearing means. The running memory clearing means further includes a straight-ahead running memory clearing means and a turning movement running memory clearing means. The judging means judges decrease in internal pressure (decompression) of a tyre after performing correction based on turning radius or value of later G. It should be noted that "straight-ahead running" indicates a condition in which the vehicle is running in a substantially straight-ahead manner in a region in which the driving wheels are rotating at identical velocities, and "turning movements" indicates a condition in which the vehicle is driving in a region in which the driving wheels are not rotating at identical velocities.

A four-wheeled vehicle is generally equipped with an apparatus for alarming decrease in air-pressure for sampling a plurality of data related to judgement values and obtaining an average of these, and in case it is judged during driving that a tyre is in a decompressed condition, the driver is notified of this fact through the display 3. Upon receipt of the information, the driver takes suitable measures such as putting air into the decompresses tyre to reinflate it or exchanging the decompressed tyre for one which is in a normal condition. In this manner, the display 3 is made to recover a condition in which it is judged that a normal internal pressure has been reassumed. However, since several judgement values which have been obtained when the tyre was in the decompressed condition remain in some of the RAMs 2d, there might be generated a false alarm on the basis of a single large judgement value owing to variations in judgement values although the tyre is once again in a normal condition.

Therefore, the present embodiment includes an arrangement in which memories of all of the RAMs 2d are cleared by the running memory clearing means when it is judged that a tyre has reassumed a normal internal pressure such that judgement of decompression can be started from the beginning.

After judging a decompressed condition of a tyre, the tyre is made to reassume a normal internal pressure, and immediately after judging that the display 3 has indicated the recovery to normal internal pressure, all of the RAMs 2d related to the judgement are cleared. With this arrangement, there can be prevented that the apparatus repeatedly but erroneously judges a decompressed condition to generate an alarm, immediately after judging a normal internal pressure condition.

Next, there will be explained for an apparatus for alarming decrease in tyre air-pressure according to another embodiment of the present invention. In this embodiment, the above-mentioned four-wheeled vehicle of normal type is replaced by a four-wheeled vehicle of FF (front engine-front drive) type which is equipped with a limited slip differential device (hereinafter called "LSD") 7 in the differential gear 6 between driving shafts 8 as shown in Figure 1. Note that 5 denotes a following or non-driven axle shaft.

In a vehicle equipped with a LSD 7, judgement of decompression is performed individually for each running mode (region), namely left turn, straight-ahead and right turn. In regions of turning movements, variations in judgement values are small, and there is hardly happened that it is judged that a tyre assumes a normal internal pressure though it is actually in a decompressed condition. In contrast to this, since variations in judgement values are large in straight-ahead running, there might be judged that a tyre assumes a normal internal pressure though it is actually in a decompressed condition. Due to this fact, in case it is erroneously judged that a tyre assumes a normal internal pressure though it is actually in a decompressed condition during straight-ahead running and all of the RAMs 2d are cleared, memory values of all of the RAMs 2d for judging a decompressed condition which have been stored during turning movements are also cleared so that judgement of decompression needs to be started again from the beginning, thereby taking time for the judgement.

Therefore, the present embodiment has been so arranged that only memories related to straight-ahead running stored in RAMs 2d are cleared when it is judged during a straight-ahead running that a normal internal pressure has been reassumed from a condition in which the tyre has been judged to be in a decompressed condition, and that memories related to turning movements and straight-ahead running stored in RAMs 2d are cleared when it is judged during turning movements that a normal internal pressure has been reassumed from a condition in which the tyre has been judged to be in a decompressed condition.

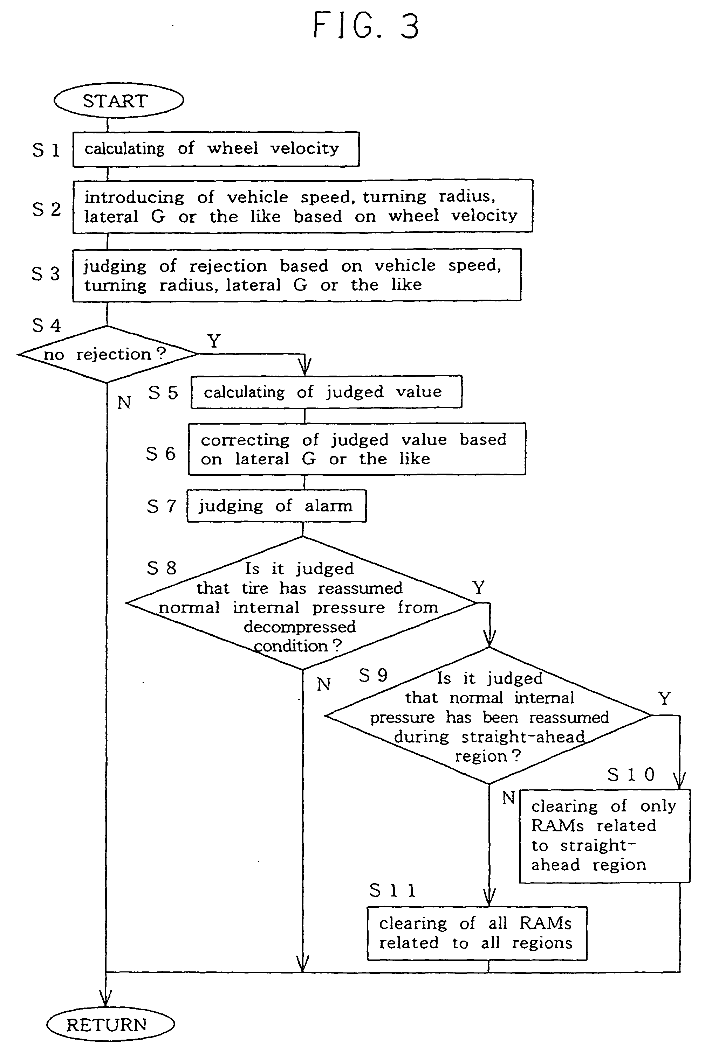

Therefore, the following steps as shown in Figure 3 are performed in the present embodiment: after performing calculation of wheel velocity (step S1), vehicle speed and turning radius of wheel are calculated based on the wheel velocity, while lateral G is calculated based on the average velocity and the turning radius of the wheels (Step S2). Based on calculated values related to the vehicle speed and others, it is judged that, for instance, the rotating angular velocity is to be rejected or not (Step S3). In case nothing is to be rejected (Step S4), a judgement value is calculated (Step S5).

The judgement value D is calculated by the following equation (1) utilising a difference between two diagonal sums.

$$D = \frac{\dfrac{F11 + F14}{2} - \dfrac{F12 + F13}{2}}{\dfrac{F11 + F12 + F13 + F14}{4}} \qquad (1)$$

Here,
F1(X): rotational angular velocity for wheel (tyre)
X : 1 = front left tyre, 2 = front right tyre, 3 = rear left tyre, 4 = rear right tyre.

After performing correction of the judgement value D based on the lateral G or the like (Step S6), it is judged whether an alarm is to be generated (Step S7). In the present embodiment, it is then judged whether the tyre has reassumed a normal internal pressure from the decompressed condition (Step S8). If it is judge that such a judgement has not been made, the same step is repeated. On the other hand, in case it is judged that such a judgement has been made, it is again judged whether the normal internal pressure has been reassumed during straight-ahead running (Step S9). If it is judged that the normal internal pressure has been reassumed during straight-ahead running, only the RAMs related to straight-ahead running are cleared (Step S10), and if it is judged that the normal internal pressure has not bee reassumed during straight-ahead running, RAMs related to turning movements and straight-ahead running are cleared (Step S11).

With this arrangement, even though it is erroneously judged during straight-ahead running that the internal pressure is normal, RAMs related to regions for turning movements are not cleared, so that it can be immediately judged that a decompressed condition is present when the vehicle enters subsequent turning movements. Moreover, in the case where it is judged during turning movements that a normal internal pressure is reassumed, RAMs related to turning movements and straight-ahead running are cleared, so that there can be prevented false alarms.

As explained so far, the present invention is so arranged that all of the RAMs related to the judgement are cleared immediately after judging that a normal internal pressure has been reassumed after judgement of a decompressed condition. Thus, it is prevented that the apparatus repeatedly but erroneously judges a decompressed condition to generate an alarm immediately after judging a normal internal pressure condition.

Further, in the case of a vehicle equipped with a LSD, it will take time until decompression is properly judged in case all of the RAMs are cleared upon judging during straight-ahead driving that the internal pressure is normal although a tyre is actually decompressed. To prevent this from happening, only the RAMs related to regions for straight-ahead running are cleared after judging a normal internal pressure in a straight-ahead region, and the RAMs for all regions are cleared only after judging a normal internal pressure in a turning movement region. With this arrangement, even though it is erroneously judged in a straight-ahead running region that the internal pressure is normal, the RAMs related to regions for turning movements are not cleared, so that it can be immediately judged that a decompressed condition is present when the vehicle enters turning movements. Moreover, in the case where it is judged during turning movements that a normal internal pressure is reassumed, RAMs related to turning movements and straight-ahead running are cleared so that false alarms are prevented.

## Claims

1. A method for alarming decrease in internal pressure of a tyre based on rotational information obtainable from tyres of a four-wheeled vehicle, **characterised in that** memories of isokinetic random access memory devices used for starting judgement of decompression from the beginning are cleared during operation of the vehicle when it is judged that a normal internal pressure has been reassumed after a tyre has been judged to be in a decompressed condition.

2. An apparatus for alarming decrease in internal pressure of a tyre based on rotation information obtainable from tyres of a four-wheeled vehicle, **characterised in that** the apparatus includes a running memory clearing means which clears memories of isokinetic random access memory devices used for starting judgement of decompression from the beginning during operation of the vehicle when it is judged that a normal internal pressure has been reassumed after a tyre has been judged to be in a decompressed condition.

3. A method for alarming decrease in internal pressure of a tyre based on rotational information obtainable from tyres of a four-wheeled vehicle equipped with a limited slip differential device, **characterised in that** when it is judged that a normal internal pressure has been reassumed after a tyre has been judged to be in a decompressed condition when the vehicle is performing running in a substantially straight manner in a region in which driving wheels are rotating at identical velocities, memories of isokinetic random access memory devices corresponding to the straight-ahead running are cleared; and when it is judged that a normal internal pressure has been reassumed after a tyre has been judged to be in a decompressed condition when the vehicle is performing turning movements in a region in which the driving wheels are not rotating at identical velocities, memories of isokinetic random access memory devices corresponding to the straight-ahead running and the turning movements are cleared.

4. An apparatus for alarming decrease in internal pressure of a tyre based on rotational information obtainable from tyres of a four-wheeled vehicle comprised with a limited slip differential device, **characterised in that** the apparatus includes a running memory clearing means which clears memories of isokinetic random access memory devices corresponding to only straight-ahead running when it is judged that a normal internal pressure has been reassumed after a tyre has been judged to be in a decompressed condition when the vehicle is performing running in a substantially straight manner in a region in which driving wheels are rotating at identical velocities, and which clears memories of isokinetic random access memory devices corresponding to straight-ahead running and turning movements when it is judged that a normal internal pressure has been reassumed after a tyre has been judged to be in a decompressed condition when the vehicle is performing turning movements in a region in which the driving wheels are not rotating at identical velocities.

## Patentansprüche

1. Verfahren zum Warnen vor einer Abnahme eines Innendrucks eines Reifens auf der Basis von Rotationsinformation, die von Reifen eines Vierradfahrzeuges erhalten werden kann, **dadurch gekennzeichnet, dass** Speicher von isokinetischen Direktzugriffsspeichereinrichtungen, die zum Starten einer Beurteilung einer Druckabnahme von dem Beginn an verwendet werden, während des Betriebes des Fahrzeuges gelöscht werden, wenn beurteilt wird, dass ein normaler Innendruck wieder hergestellt worden ist, nachdem beurteilt worden ist, dass ein Reifen in einem Zustand mit Druckverlust war.

2. Vorrichtung zum Warnen vor einer Abnahme eines Innendrucks eines Reifens auf der Basis von Rotationsinformation, die von Reifen eines Vierradfahrzeuges erhalten werden kann, **dadurch gekennzeichnet, dass** die Vorrichtung ein Fahrtspeicherlöschmittel umfasst, das Speicher von isokinetischen Direktzugriffsspeichereinrichtungen, die zum Starten einer Beurteilung eines Druckverlustes von dem Beginn an verwendet werden, während des Betriebes des Fahrzeuges löscht, wenn beurteilt wird, dass ein normaler Innendruck wieder hergestellt worden ist, nachdem beurteilt worden ist, dass ein Reifen in einem Zustand mit Druckverlust war.

3. Verfahren zum Warnen vor einer Abnahme eines Innendrucks eines Reifens auf der Basis von Rotationsinformation, die von Reifen eines Vierradfahrzeuges erhalten werden kann, das mit einer Sperrdifferentialeinrichtung ausgestattet ist, **dadurch gekennzeichnet, dass**, wenn beurteilt wird, dass ein normaler Innendruck wieder hergestellt worden ist, nachdem beurteilt worden ist, dass ein Reifen in einem Zustand mit Druckverlust war, wenn das Fahrzeug eine Fahrt auf eine im Wesentlichen gerade Weise in einem Bereich durchführt, in dem Antriebsräder mit identischen Geschwindigkeiten rotieren, Speicher von isokinetischen Direktzugriffsspeichereinrichtungen, die der Geradeausfahrt entsprechen, gelöscht werden; und wenn beurteilt wird, dass ein normaler Innendruck wieder hergestellt worden ist, nachdem beurteilt worden ist, dass ein Reifen in einem Zustand mit Druckverlust war, wenn das Fahrzeug Kurvenfahrtbewegungen in einem Bereich durchführt, in dem die Antriebsräder nicht mit identischen Geschwindigkeiten rotieren, Speicher von isokinetischen Direktzugriffsspeichereinrichtungen, die den Geradeausfahrt- und den Kurvenfahrtbewegungen entsprechen, gelöscht werden.

4. Vorrichtung zum Warnen vor einer Abnahme eines Innendrucks eines Reifens auf der Basis von Rotationsinformation, die von Reifen eines Vierradfahrzeuges, das eine Sperrdifferentialeinrichtung umfasst, erhalten werden kann, **dadurch gekennzeichnet, dass** die Vorrichtung ein Fahrtspeicherlöschmittel umfasst, das Speicher von isokinetischen Direktzugriffsspeichereinrichtungen, die nur Geradeausfahrt entsprechen, löscht, wenn beurteilt wird, dass ein normaler Innendruck wieder hergestellt worden ist, nachdem beurteilt worden ist, dass ein Reifen in einem Zustand mit Druckverlust war, wenn das Fahrzeug eine Fahrt auf eine im Wesentlichen gerade Weise in einem Bereich durchführt, in dem Antriebsräder mit identischen Geschwindigkeiten rotieren, und das Speicher von isokinetischen Direktzugriffsspeichereinrichtungen, die Geradeausfahrt- und Kurvenfahrtbewegungen entsprechen, löscht, wenn beurteilt wird, dass ein normaler Innendruck wieder hergestellt worden ist, nachdem beurteilt worden ist, dass ein Reifen in einem Zustand mit Druckverlust war, wenn das Fahrzeug Kurvenfahrtbewegungen in einem Bereich durchführt, in dem die Antriebsräder nicht mit identischen Geschwindigkeiten rotieren.

**Revendications**

1. Procédé pour avertir d'une baisse de la pression interne d'un pneumatique sur la base d'une information de rotation pouvant être obtenue à partir de pneumatiques d'un véhicule à quatre roues, **caractérisé en ce que** des mémoires de dispositifs de mémoires à accès direct isocinétiques utilisés pour déclencher l'évaluation d'une décompression à partir du début sont effacées pendant un fonctionnement du véhicule, lorsqu'il est établi qu'une pression interne normale s'est rétablie après qu'un pneumatique ait été évalué comme étant dans un état de décompression.

2. Dispositif pour avertir d'une réduction de la pression interne dans un pneumatique sur la base d'une information de rotation pouvant être obtenue à partir de pneumatiques d'un véhicule à quatre roues, **caractérisé en ce que** le dispositif inclut des moyens d'effacement de mémoires de déplacement, qui effacent des mémoires de dispositifs de mémoires à accès direct isocinétiques et sont utilisés pour déclencher l'évaluation d'une décompression à partir du début pendant le fonctionnement du véhicule lorsqu'il est établi qu'une pression interne normale s'est rétablie après qu'un pneumatique a été évalué comme étant dans un état de décompression.

3. Procédé pour avertir d'une réduction de la pression interne d'un pneumatique sur la base d'une information de rotation pouvant être obtenue à partir de pneumatiques d'un véhicule à quatre roues équipé d'un dispositif différentiel à glissement limité, **caractérisé en ce que**, lorsqu'il est établi qu'une pression interne normale s'est rétablie après qu'un pneumatique a été évalué comme étant dans un état de décompression, lorsque le véhicule exécute un déplacement d'une manière essentiellement rectiligne, dans une zone dans laquelle des roues motrices tournent à des vitesses identiques, des mémoires de dispositifs de mémoires à accès direct isocinétiques correspondant au déplacement en ligne droite sont effacées; et lorsqu'il est établi qu'une pression interne normale s'est rétablie après qu'un pneumatique a été évalué comme étant dans un état de décompression, lorsque le véhicule exécute des mouvements de virage dans une zone, dans laquelle les roues motrices ne tournent pas à des vitesses identiques, les mémoires de dispositifs de mémoires à accès direct isocinétiques correspondant au déplacement en ligne droite et aux mouvements de virage sont effacées.

4. Dispositif pour avertir d'une réduction de la pression interne d'un pneumatique sur la base d'une information de rotation pouvant être obtenue à partir de pneumatiques d'un véhicule à quatre roues équipé d'un dispositif différentiel à glissement limité, **caractérisé en ce que** le dispositif inclut des moyens d'effacement de mémoires de déplacement qui effacent des mémoires de dispositifs de mémoires à accès direct isocinétiques correspondant uniquement à un déplacement en ligne droite lorsqu'il est évalué qu'une pression interne normale s'est rétablie après que le pneumatique a été évalué comme se situant dans un état de décompression, lorsque le véhicule exécute un déplacement selon un mode sensiblement en ligne droite dans une zone dans laquelle des roues motrices tournent à des vitesses identiques, et qui effacent des mémoires de dispositifs de mémoires à accès direct isocinétiques conformément à des mouvements de déplacement en ligne droite et de virage lorsqu'il est établi qu'une pression interne normale s'est rétablie après qu'un pneumatique a été évalué comme étant dans un état de décompression lorsque le véhicule exécute des mouvements de virage dans une zone dans laquelle les roues motrices ne tournent pas à des vitesses identiques.

# FIG. 1

# FIG. 2

I/O Interface

C P U

ROM

RAM

w1 w2
w3 w4

# FIG. 3

START

S 1 | calculating of wheel velocity

S 2 | introducing of vehicle speed, turning radius, lateral G or the like based on wheel velocity

S 3 | judging of rejection based on vehicle speed, turning radius, lateral G or the like

S 4 — no rejection? — Y

N

S 5 | calculating of judged value

S 6 | correcting of judged value based on lateral G or the like

S 7 | judging of alarm

S 8 — Is it judged that tire has reassumed normal internal pressure from decompressed condition? — Y

N

S 9 — Is it judged that normal internal pressure has been reassumed during straight-ahead region? — Y

N

S 10 | clearing of only RAMs related to straight-ahead region

S 11 | clearing of all RAMs related to all regions

RETURN